# EUROPÄISCHE PATENTSCHRIFT

(11) **EP 1 728 097 B1**
(45) Veröffentlichungstag und Bekanntmachung des Hinweises auf die Patenterteilung: **22.05.2013**
(21) Anmeldenummer: 04821171.8
(22) Anmeldetag: 06.12.2004
(51) Int. Cl.: G01S 13/93, G01S 13/48, H01Q 25/00, H01Q 1/32

(54) **RADARSYSTEM F R KRAFTFAHRZEUGE**
RADAR SYSTEM FOR MOTOR VEHICLES
SYSTEME RADAR POUR AUTOMOBILES

(30) Priorität: 29.01.2004 DE 102004004492
(43) Veröffentlichungstag der Anmeldung: 06.12.2006
(73) Patentinhaber: ROBERT BOSCH GMBH, 70442 Stuttgart (DE)
(72) Erfinder: GOTTWALD, Frank, 71287 Weissach (DE); TOENNESEN, Tore, 72760 Reutlingen (DE); BINZER, Thomas, 70565 Stuttgart (DE)
(86) Internationale Anmeldenummer: PCT/EP2004/053275
(87) Internationale Veröffentlichungsnummer: WO 2005/073753

(56) Entgegenhaltungen:
- WO-A1-2004/017093
- US-A- 5 008 678
- US-A1- 2002 163 478
- US-A1- 2002 175 852
- US-A1- 2003 122 704

## Beschreibung

### Stand der Technik

Die Erfindung betrifft ein Radarsystem für Kraftfahrzeuge, mit mindestens einem Radarsensor zur Überwachung des Umfelds des Kraftfahrzeugs und insbesondere des Verkehrs auf einer Nachbarspur.

Radarsysteme in Kraftfahrzeugen ermöglichen es, die Abstände und, mit Hilfe des Doppler-Effektes, auch die Relativgeschwindigkeiten anderer Fahrzeuge oder sonstiger Objekte im Verkehrsumfeld zu messen, und werden bisher zumeist dazu eingesetzt, die Geschwindigkeit des eigenen Fahrzeugs automatisch an die Geschwindigkeit eines vorausfahrenden Fahrzeugs anzupassen und den Abstand zu dem vorausfahrenden Fahrzeug zu regeln.

Für Radarsysteme, die insbesondere auch eine Überwachung des Verkehrs auf Nachbarspuren ermöglichen, gibt es darüber hinaus in Kraftfahrzeugen vielfältige Anwendungsmöglichkeiten, beispielsweise im Rahmen von Einpark- oder Rückfahrhilfen, zur Erkennung von Objekten im toten Winkel, für Precrash -Funktionen, eine Stop & Go-Funktion und dergleichen. Unter Pr ecrash-Funktionen versteht man Funktionen, die es gestatten, eine bevorstehende Kollision automatisch zu erkennen und durch Eingriff in das Brems -, Antriebs- und/oder Lenksystem abzuwenden oder wenigstens zu mildern und/oder passive Sicherheitssysteme wie Gurtstraffer, Airbags und dergleichen rechtzeitig im Hinblick auf die bevorstehende Kollision zu konfigurieren. Stop & Go-Funktionen stellen eine Weiterbildung der bekannten Abstandsregelung dar und ermöglichen es, beispielsweise im Staubetrieb oder ggf. auch im Stadtverkehr, das Fahrzeug automatisch in den Stand zu bremsen und ggf. auch automatisch wieder anfahren zu lassen, wenn sich das vordere Fahrzeug wieder in Bewegung setzt. Da diese Funktionen vorwiegend im unteren Geschwindigkeitsbereich und bei rasch wechselnden Verkehrssituationen eingesetzt werden, ist eine Überwachung des Verkehrs auf Nebenspuren hier besonders wichtig.

Eine weitere Anwendungsmöglichkeit für Radarsysteme der eingangs genannten Art ist ein sogenannter Spurwechselassistent, der de n Fahrer bei Fahrten auf mehrspurigen Straßen bei einem Spurwechsel unterstützt, um beispielsweise Kollisionen mit überholenden Fahrzeugen zu verhindern.

Für all die genannten Funktionen werden zur Überwachung der näheren Umgebung des eigenen Fahrzeugs in sbesondere Radarsysteme mit kurzer oder mittlerer Reichweite benötigt, die aber eine möglichst hohe räumliche Auflösung aufweisen sollten. Für diesen Zweck sind gepulste Radarsysteme besonders geeignet.

Für langreichweitige Radarsysteme, wie sie zur Absta ndsregelung eingesetzt werden, sind auch winkelauflösende Systeme bekannt, beispielsweise Mehrstrahlradars, die mit Hilfe mehrerer Antennenpatches mehrere einander überlappende Radarkeulen mit leicht unterschiedlichen Abstrahlrichtungen erzeugen und es ges tatten, durch Auswertung der Phasenlage der Radarechos Winkelinformation über die georteten Objekte zu erhalten, so daß bei der Abstandsregelung zwischen Fahrzeugen auf der eigenen Fahrspur und Fahrzeugen auf Nachbarspuren unterschieden werden kann.

Für Systeme mit kürzerer Reichweite, die insbesondere auch eine Überwachung des Rückraums des Fahrzeugs gestatten, wird dagegen bei den bisher vorgeschlagenen Konzepten mit mehreren getrennten Radarsensoren gearbeitet, die jeweils für eine spezielle Überwachungsaufgabe ausgebildet und angeordnet sind. Beispielsweise sind bei einem dieser Konzepte insgesamt vier Radarsensoren vorgesehen, die paarweise auf den beiden Seiten des Fahrzeugs angeordnet sind. Ein Sensor jedes Paares erzeugt eine schräg nach rückwärts gerichtete Radarkeule zur Erkennung von Fahrzeugen, die sich auf der Nachbarspur und hinter dem eigenen Fahrzeug befinden, und der zweite Sensor des Paares erzeugt eine zur Seite gerichtete Radarkeule, vorzugsweise etwa in Höhe der hinteren Stoßstange des eigenen Fahrzeugs, zur Ausleuchtung des toten Winkels in unmittelbarer Nähe des eigenen Fahrzeugs.

Aus WO 2004/017093 A1 ist ein Radarsystem nach dem Oberbegriff des Anspruchs 1 bekannt.

US 2002/163478 A1 beschreibt einen Radarsensor, der eine phasengesteuerte Antenne und eine Steuereinrichtung zur Einstellung mehrerer Radarkeulen mit unterschiedlicher Geometrie aufweist.

US 5 008 678 beschreibt einen Radarsensor, der an einer rückwärtigen seitlichen Ecke des Kraftfahrzeugs installiert ist und zwei etwa gleich große rückwärtrsgerichtete Radarkeulen erzeugt, von denen eine in Bezug auf die eigene Fahrspur schräg nach innen und die andere schräg nach außen weist.

### Vorteile der Erfindung

Die Erfindung mit den in Anspruch 1 angegebenen Merkmalen bietet den Vorteil, daß eine zuverlässige Überwachung des Verkehrs auf Nachbarspuren im näheren Umfeld des eigenen Fahrzeugs mit einem geringeren Installationsaufwand ermöglicht wird.

Zu diesem Zweck ist erfindungsgemäß vorgesehen, daß der Radarsensor, der vorzugweise eine Reichweite von weniger als 50 m aufweist, eine phasengesteuerte Antenne und eine Steuereinrichtung zur Einstellung mehrerer Radarkeulen mit unterschiedlicher Geometrie aufweist.

In der Radartechnik sind phasengesteuerte Antennen grundsätzlich bekannt. Bei solchen Antennen werden mehrere Antennenelemente, z. B. Patches, mit gegeneinander phasenversetzten Signalen angeteuert, so daß die Geometrie der Radarkeule, d.h., die Winkelverteilung des gesendeten Radarsignals, durch Interferenzeffekte beeinflußt wird. Durch Steuerung der relativen Phasenlage der einzelnen Patches läßt sich dann die Geometrie der Radarkeule variieren.

Dieses Prinzip wird dazu ausgenutzt, mehrere Überwachungsfunktionen in einen einzigen Sensor zu integrieren, so daß sich die Anzahl der benötigten Sensoren und damit der Installationsaufwand verringern läßt. Zugleich kann durch die gezielte Steuerung der Geometrie der Radarkeule die Ortungssicherheit und -genauigkeit gesteigert werden.

Insbesondere läßt sich durch geeignete Phasensteuerung der Antenne erreichen, daß ein einziger Sensor eine schräg nach hinten gerichtete Radarkeule mit mittlerer Reichweite und zugleich eine annähernd rechtwinklig zur Fahrzeuglängsachse orientierte Nebenkeule erzeugt, mit der die Nachbarspur etwa in Höhe der hinteren Stoßstange des eigenen Fahrzeugs überwacht werden kann. Auf diese Weise wird auf jeder Fahrzeugseite nur noch ein einziger Sensor statt der bisher erforderlichen zwei Sensoren benötigt.

Vorteilhafte Weiterbildungen und Ausgestaltungen der Erfindung ergeben sich aus den Unteransprüchen.

Es ist möglich, zu jedem Zeitpunkt mehrere, beispielsweise zwei Radarkeulen zu erzeugen und die Form und Richtung dieser Radarkeulen in gewissen Zeitabständen oder ggf. auch situationsabhängig durch Änderung der Phasensteuerung zu variieren. Diese Variation ermöglicht es insbesondere, durch Vergleich der mit verschiedenen Konfigurationen empfangenen Amplituden und/oder Phasen der Radarechos genauere Richtungsinformationen zu erhalten. Außerdem läßt sich so eine Vergrößerung des insgesamt möglichen Detektionsbereiches erreichen.

Die seitlich, etwa quer zur Fahrzeugslängsachse gerichteten Nebenkeulen können auch zur Erkennung von Leitplanken genutzt werden, so daß sich feststellen läßt, auf welcher Spur das eigene Fahrzeug fährt und ob der Fahrer annähernd die Spurmitte einhält. So kann mit Hilfe des erfindungsgemäßen Radarsystems auch eine automatische Spurverlassenswarnung ausgegeben und/oder ein korrigierender Lenkeingriff veranlaßt werden.

Gemäß einer Weiterbildung kann die Phasensteuerung der Antenne auch dazu benutzt werden, die Radarkeule oder Keulen bei Kurvenfahrten geeignet nachzuführen. In diesem Fall kann die Phasensteuerung beispielsweise vom Lenkeinschlag oder von der gemessenen Längs - und Giergeschwindigkeit abhängig sein.

### Zeichnung

Ein Ausführungsbeispiel der Erfindung ist in den Zeichnungen
dargestellt und in der nachfolgenden Beschreibung näher erläutert.

Es zeigen:
- Figur 1: eine Prinzipskizze eines erfindungsgemäßen Radarsystems;
- Figur 2: ein Blockdiagramm eines Radarsensors; und
- Figuren 3 bis 5: Prinzipskizzen zur Erläuterung anderer Ausführungsbeispiele des Rada rsystems.

### Beschreibung des Ausführungsbeispiels

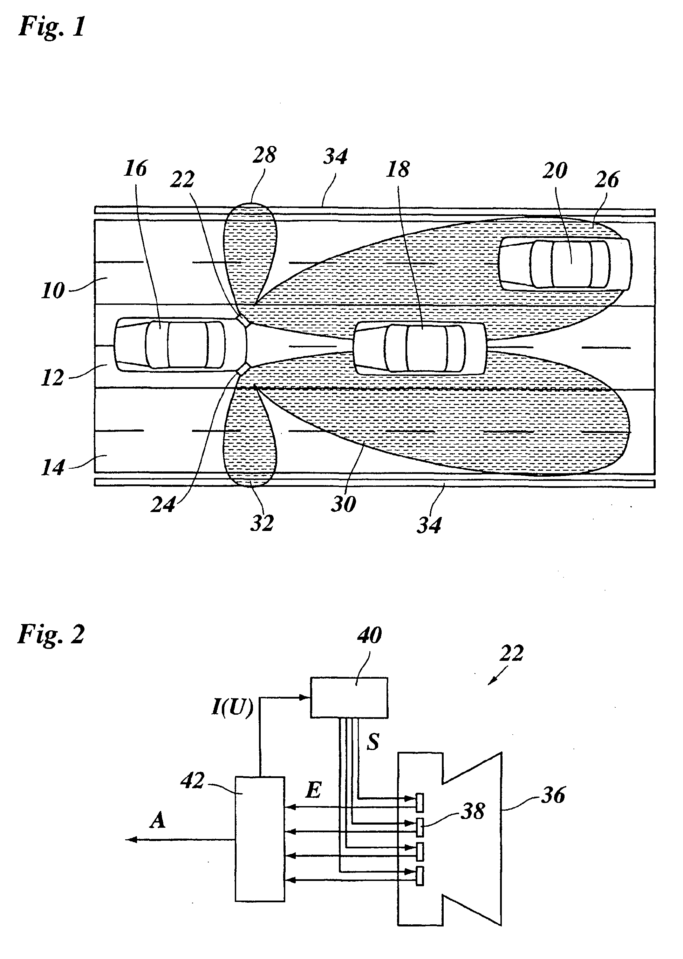

In Figur 1 ist ein Abschnitt einer Fahrbahn mit drei Fahrspuren 10, 12, 14 gezeigt, die von einem mit dem Radarsystem ausgerüsteten Fahrzeug 16 sowie von zwei weiteren Fahrzeugen 18, 20 befahren wird. Das Radarsystem des Fahrzeugs 16 wird hier durch zwei Radarsensoren 22, 24 gebildet, die jeweils auf einer Seite des Fahrzeugs in Höhe des Fahrzeughecks angeordnet sind. Die Radarsensoren 22 und 24 haben phasengesteuerte Antennen, mit denen sich jeweils mehrere Radarkeulen 26, 28 bzw. 30, 32 mit unterschiedlicher Geometrie erzeugen lassen. Die Radarkeulen 26 und 30 sind Hauptkeulen, die schräg nach hinten gerichtet sind und den Verkehr auf den Nachbarspuren 10, 14 hinter dem Fahrzeug 16 überwachen, wenn das Fahrzeug 16 die mittlere Spur 12 befährt. Die Radarkeulen 28 und 32 sind Nebenkeulen, die im wesentlichen rechtwinklig zur Längsrichtung des Fahrzeugs 16 gerichtet sind und in Höhe der hinteren Stoßstange des Fahrzeugs 16 die Bereiche auf den beiden Nachbarspure n 10, 14 überwachen.

Die Radarsensoren 20, 24 senden kurze Radarimpulse aus und messen die Laufzeit sowie die Dopplerverschiebungen der von den georteten Objekten, beispielsweise den Fahrzeugen 18, 20, empfangenen Radarechos. Anhand dieser Daten lassen si ch dann die Abstände und Relativgeschwindigkeiten der georteten Objekte berechnen. Durch Auswertung der Phase der empfangenen Radarechos läßt sich im Prinzip auch eine Winkelinformation über die georteten Objekte erhalten. Durch Auswertung der Phasen an ve rschiedenen Elementen der Antenne kann entschieden werden, ob sich das Objekt in der Hauptkeule oder in der Nebenkeule befindet. Weitere Informationen über die Orte und Bewegungen der Objekte lassen sich in an sich bekannter Weise durch eine sogenannte Tracking-Prozedur gewinnen. Bei dieser Prozedur werden die in verschiedenen Meßzyklen (die jeweils einen oder mehrer Radarimpulse umfassen können) in kurzen zeitlichen Abständen erhaltenen Daten miteinander verglichen, so daß sich die Orts - und Geschwindigkeitsänderungen der Objekte verfolgen lassen. Wenn beispielsweise das Fahrzeug 16 kurz vor der in Figur 1 gezeigten Situation das Fahrzeug 20 überholt hat, so wurde ein von dem Fahrzeug 20 erzeugtes Echo zunächst von der Radarkeule 28 und danach von der Radarkeule 26 empfangen. Auf diese Weise läßt sich erkennen, daß das Fahrzeug 20 sich auf der Nachbarspur 10 und nicht etwa direkt hinter dem Fahrzeug 16 auf der von diesem Fahrzeug befahrenen Spur 12 befindet. Ein weiteres Kriterium, das die Spurerkennung ermöglicht, besteht im gezeigten Beispiel darin, daß Fahrzeuge, für die, wie für das Fahrzeug 20, ein großer Abstand gemessen wird, sich auf der Nebenspur 10 befinden müssen, da die Radarkeule 26 bei großen Abständen nicht mehr die mittlere Spur 12 überstreicht. Fahrzeuge die, wie das Fahrzeug 18, sich auf der von dem Fahrzeug 16 befahrenen Spur 12 befinden, sind außerdem daran zu erkennen, daß sie von beiden Radarsensoren 22 und 24 geortet werden, während Fahrzeuge auf den Nachbarspuren jeweils nur von einem der Sensoren geortet werden.

Durch das beschriebene System wird folglich mit zwei Radarsensoren 22, 24 eine zuverlässige Überwachung des Verkehrs auf beiden Nachbarspuren 10, 14 ermöglicht. Der überwachte Längsabschnitt der Nachbarspuren erstreckt sich dab ei von der Höhe des Fahrzeugs 16 (Radarkeulen 28 und 32) bis zu einem Abstand von etwa 40 m hinter dem Fahrzeug 16 (Radarkeulen 26 und 30).

Sofern die Fahrbahn auf mindestens einer Seite von einer Leitplanke 34 flankiert ist, werden mit den Radarkeulen 28 und 32 auch die Leitplanken geortet. Dies ermöglicht eine Bestimmung der von dem eigenen Fahrzeug 16 befahrenen Spur. Diese Information kann in einem geeigneten Auswertesystem auch dazu benutzt werden, eine Spurverlassungswarnung auszugeben, wenn der Fahre r, ohne den Fahrtrichtungsanzeiger betätigt zu haben, deutlich von der Spurmitte abweicht.

Die Breite der Hauptkeulen 26, 30 entspricht vorzugsweise annähernd der Breite der Fahrspuren, so daß auch schmale Objekte wie z.B. Zweiräder sicher erkannt werden können.

Der Aufbau der Radarsensoren, beispielsweise des Radarsensors 22, ist schematisch in Figur 2 dargestellt. Eine Antenne 36 weist mindestens zwei, im gezeigten Beispiel vier getrennt ansteuerbare Patches 38 auf. Von einer Phasensteuerung 40 wird jedem Patch 38 ein gesondertes Signal S zugeführt, das über das Patch 38 und die Antenne 36 in einen relativ großen Winkelbereich als Radarsignal abgestrahlt wird. Die den einzelnen Patches 38 gleichzeitig zugeführten Signale S unterscheiden sich in ihrer Phase nlage, so daß die einzelnen Signale in bestimmter Weise miteinander interferieren. Durch destruktive und konstruktive Interferenz ergibt sich die Charakteristik mit der Hauptkeule 26 und der Nebenkeule 28. Die Phasenbeziehung zwischen den einzelnen Signale n S ist in dem in Figur 1 gezeigten Beispiel in der Phasensteuerung 40 fest eingestellt. Eine Steuereinheit 42 liefert ein Impulssignal I an die Phasensteuerung 40 und erhält von jedem der Patches 38 ein Signal E, das die empfangenen Radarechos repräsentiert. Jeder Impuls des Impulssignals I bewirkt das Senden eines kurzen Radarimpulses, der von den Objekten (Fahrzeuge 18, 20) reflektiert wird und mit einer für das jeweilige Objekt charakteristischen Zeitverzögerung (Laufzeit) und mit einer für die Relativg eschwindigkeit dieses Objektes charakteristischen Doppler -Frequenzverschiebung wieder von den Patches 38 empfangen und an die Steuereinheit 42 übermittelt wird. Die Steuereinheit 42 wertet die Laufzeiten, die Frequenzen und die Phasen der durch die Signale E repräsentierten Radarechos aus. Durch Vergleich der Phasen der Radarechos, die von den verschiedenen Patches 38 empfangen werden und zu demselben Objekt gehören, also gleiche Laufzeiten und Dopplerverschiebungen haben, kann die Steuereinheit 42 zumindest grob die Richtung erkennen, aus der das Echo empfangen wurde. Zumindest läßt sich so unterscheiden, ob das Echo aus der Hauptkeule 26 oder aus der Nebenkeule 28 stammt. Die so erhaltenen Abstands-Relativgeschwindigkeits - und Richtungsdaten werden von der Steuereinheit 42 als Ausgangssignal A an eine nicht gezeigte Auswerteeinheit ausgegeben, beispielsweise an einen elektronischen Spurwechselassistenten, der den Fahrer darüber informiert, ob ein gefahrloser Spurwechsel möglich ist.

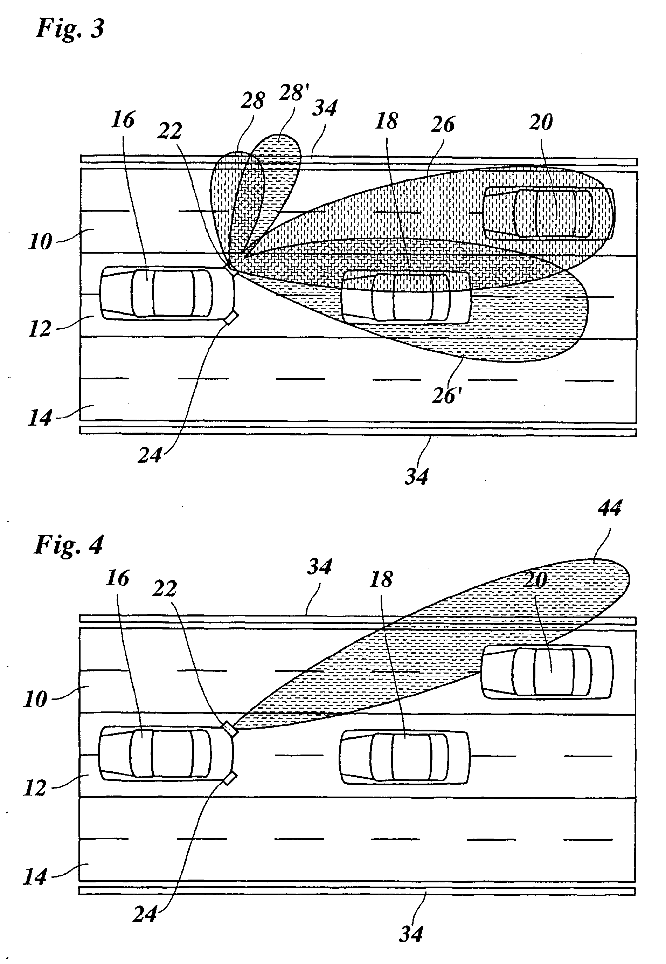

Bei anderen Ausführungsb eispielen, die nachstehend anhand der Figuren 3 bis 5 näher erläutert werden sollen, ist der Aufbau der Radarsensoren gemäß Figur 2 so modifiziert, daß die Steuereinheit 42 an die Phasensteuerung 40 neben dem Impulssignal I auch ein Umschaltsignal U übermittelt, das eine Umschaltung der Phasenbeziehung zwischen den Signalen S bewirkt. Auf diese Weise läßt sich die Anzahl und/oder die Geometrie der von einem einzelnen Radarsensor erzeugten Radarkeulen zeitlich variieren.

In Figur 3 ist die Änderung der Radar keulen für den Radarsensor 22 dargestellt. In einem ersten Meßzyklus, der einen oder mehrere Radarpulse umfassen kann, haben die Radarkeulen 26, 28 annähernd die gleiche Geometrie wie in Figur 1. In einem nachfolgenden Meßzyklus werden dagegen Radarkeulen 26' und 28' erzeugt, die gegenüber den zuvor erzeugten Keulen um einen bestimmten Winkel zur Fahrbahnmitte hin verdreht sind. Außerdem ist die Hauptkeule 26 hier etwas abgeschwächt und damit verkürzt, und die Nebenkeule 28' entsprechend verlängert. Durch diesen Wechsel in der Geometrie der Radarkeulen ändern sich die Phasen und auch die Amplituden der empfangenen Radarechos in charakteristischer Weise. Im Extremfall kann ein Radarecho auch völlig verschwinden. Beispielsweise wird das Fahrzeug 20 in Figur 3 nur von der Hauptkeule 26 im ersten Zyklus aber nicht von der Hauptkeule 26' im zweiten Zyklus überstrichen. Daran läßt sich unmittelbar erkennen, daß sich das Fahrzeug 20 auf der Nebenspur 10 und nicht auf der mittleren Spur 12 befindet. Ähnliche Änderungen würden sich auch für ein Objekt ergeben, das von den Nebenkeulen 28 und 28' erfaßt wird. Durch das ständige Variieren der Geometrie der Radarkeulen wird zum einen der effektive Überwachungsbereich vergrößert, so daß etwaige Überwachungslücken geschlossen werden, und zum anderen wird eine Bestimmung der Richtungsinformation mit wesentlich höherer Genauigkeit ermöglicht. Neben der Phaseninformation kann dabei auch die Tatsache ausgenutzt werden, daß die Amplitude des Radarechos in charakteristischer Weise abnimmt, je weiter sich das reflektierende Objekt von der Mitte der Radarkeule zum Rand hin entfernt.

Im einfachsten Fall erfolgt ein ständiger Wechsel zwischen den Radarkeulen 26 und 28 einerseits und dem Radarkeulenpaar 26', 28' andererseits. Wahlweise ist es jedoch auch möglich, die Winkel, unter denen die Radarkeulen abgestrahlt werden, über mehrere Meßzyklen in mehreren Schritten zu variieren. Diese Richtungsänderung der Radarkeulen kann auch dazu benutzt werden, bei Kurvenfahrten die Fahrbahnkrümmun g auszugleichen, so daß die Hauptkeule auch bei gekrümmter Fahrbahn stets im wesentlichen auf die Nebenspur gerichtet bleibt. In diesem Fall wird das Umschaltsignal U, das die Änderung der Abstrahlrichtung bewirkt, in Abhängigkeit von der Fahrbahnkrümmung variiert. Als Maß für die Fahrbahnkrümmung kann beispielsweise der Lenkradeinschlag des Fahrzeugs 16 herangezogen werden.

Eine weitere Variante des Radarsystems ist in Figur 4 illustriert. Im ersten Meßzyklus haben die Radarkeulen die gleiche Konfiguration wie in Figur 3, d.h., es gibt eine Hauptkeule 26 und eine Nebenkeule 28. Im zweiten Meßzyklus werden diese Keulen jedoch nicht gedreht, sondern zu einer einzigen Keule 44 verschmolzen, die eine größere Reichweite hat und eine mittlere Winkellage einnimmt. Auch bei dem Wechsel zwischen der Konfiguration mit einer Keule und zwei Keulen ergeben sich charakteristische Änderungen in den Amplituden und Phasenlagen, die eine Ortsbestimmung mit hoher Winkelauflösung ermöglichen. Eine Unterscheidung zwischen dem Fahrzeug 20 auf der Nachbarspur und dem Fahrzeug 18 auf der eigenen Spur 12 ist unmittelbar dadurch möglich, daß die Keule 26 beide Fahrzeuge sieht, während die Keule 44 nur das Fahrzeug 20 sieht. Die Leitplanke 34 wird von beiden Keulen gesehen und daher auch bei ungünstigen Verhältnissen erkannt.

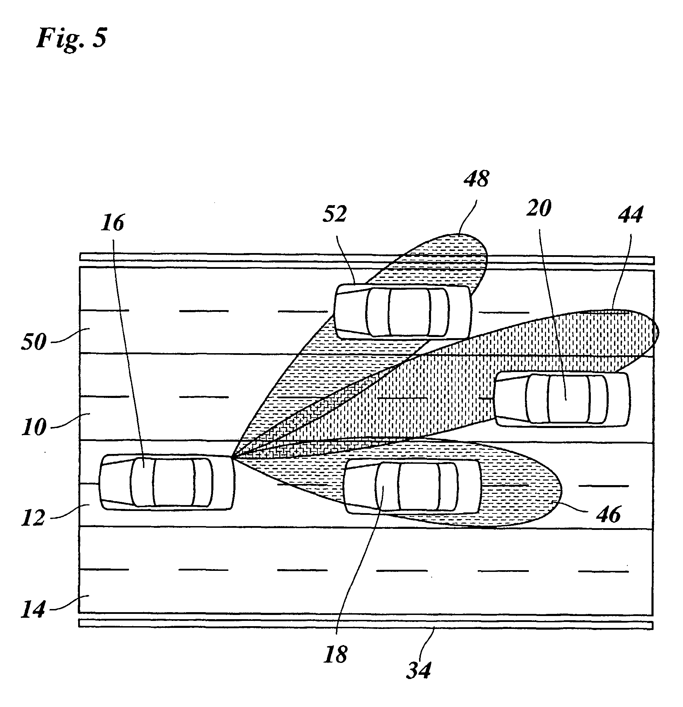

Figur 5 zeigt eine weitere Ausführungsform, bei der periodisch zwischen der einzelnen Radarkeule 44 und zwei annähernd symmetrisch zu dieser Keule 44 liegenden, etwa gleich großen Keulen 46, 48 umgeschaltet wird. Da es hier einen relativ großen Bereich gibt, in dem ein Fahrzeug sowohl von der Keule 44 als auch von einer der Keulen 46, 48 gesehen wird, läßt sich durch Umschaltung zwischen den Konfigurationen und durch Auswertung von Amplitude und Phase eine relativ genaue Richtungsbestimmung durchführen. Die Keule 46 ermöglicht zudem eine unmittelbare Identifizierung von Fahrzeugen, die sich auf der Spur 12 des Fahrzeugs 16 befinden.

In Figur 5 ist außerdem als Beispiel eine vierspurige Fahrbahn mit noch einer weiteren Fahrspur 50 gezeigt, die bezüglich der Spur 12 des Fahrzeugs 16 die übernächste Spur darstellt. Wegen der großen Reichweite der Keule 48 kann auch ein auf dieser übernächsten Spur 50 fahrendes Fahrzeug 52 geortet und der richtigen Fahrspur zugeordnet werden.

Auch bei den Ausführungsformen nach Figuren 4 und 5 ist selbstverständlich eine Nachführung der Radarkeulen entsprechend der Fahrbahnkrümmung möglich.

## Patentansprüche

1. Radarsystem für Kraftfahrzeuge (16), mit mindestens einem Radarsensor (22, 24) zur Überwachung des Umfelds des Kraftfahrzeugs, insbesondere des Verkehrs auf einer Nachbarspur (10, 14; 50), der eine phasengesteuerte Antenne (36) und eine Steuereinrichtung (40, 42) zur Einstellung mehrerer Radarkeulen (26, 28; 30, 32; 26', 28; 44; 46, 48) mit unterschiedlicher Geometrie aufweist, **dadurch gekennzeichnet, daß** der Radarsensor dazu ausgebildet ist, zumindest zeitweise mindestens zwei Radarkeulen (26, 28; 30, 32; 26', 28'; 46, 48) mit unterschiedlichen Abstrahlrichtungen gleichzeitig zu erzeugen, die unterschiedlich groß sind und von denen die größere (26; 30; 26') im Azimut in Bezug auf die Längsrichtung des Fahrzeugs (16) schräg nach hinten und auswärts zur Seite gerichtet ist und die kleinere (28; 32; 28') im Azimut in Bezug auf die Fahrzeuglängsrichtung zur Seite gerichtet ist, wobei die Steuereinrichtung (40, 42) dazu ausgebildet ist, unterschiedliche Konfigurationen von Radarkeulen (26, 28; 44; 46, 48) zeitlich nacheinander zu erzeugen.

2. Radarsystem nach Anspruch 1, **dadurch gekennzeichnet, daß** die zu einem ersten Zeitpunkt erzeugte Konfiguration von Radarkeulen (26, 28) gegenüber einer zu einem anderen Zeitpunkt erzeugten Konfiguration von Radarkeulen (26', 28') um einen bestimmten Winkel gedreht ist.

3. Radarsystem nach Anspruch 1, **dadurch gekennzeichnet, daß** die zeitlich nacheinander erzeugten Konfigurationen von Radarkeulen (26, 28; 44; 46, 48) sich in der Anzahl getrennter Radarkeulen unterscheiden.

4. Radarsystem nach Anspruch 3, **dadurch gekennzeichnet, daß** die Steuereinrichtung (40, 42) dazu ausgebildet ist, abwechselnd eine Konfiguration mit zwei Radarkeulen (26, 28; 46, 48) und eine Konfiguration mit nur einer Radarkeule (44) zu erzeugen, wobei die eine Radarkeule etwa auf der Winkelhalbierenden der beiden Radarkeulen der anderen Konfiguration liegt.

5. Radarsystem nach einem der vorstehenden Ansprüche, **dadurch gekennzeichnet, daß** die Steuereinrichtung (40, 42) dazu ausgebildet ist, die Abstrahlrichtung der Radarkeulen in Abhängigkeit von der Fahrbahnkrümmung zu variieren.

## Claims

1. Radar system for motor vehicles (16), having at least one radar sensor (22, 24) for monitoring the surroundings of the motor vehicle, in particular the traffic on an adjacent lane (10, 14; 50), which radar sensor (22, 24) has a phase-controlled antenna (36) and a control device (40, 42) for setting a plurality of radar lobes (26, 28; 30, 32; 26', 28'; 44; 46, 48) with different geometry, **characterized in that** the radar sensor is designed to generate simultaneously at least two radar lobes (26, 28; 30, 32; 26', 28'; 46, 48) with different radiation directions at least temporarily, said radar lobes (26, 28; 30, 32; 26', 28'; 46, 48) being of different sizes and the larger (26; 30; 26') of which is directed in the azimuth obliquely downward and outwards to the side with respect to the longitudinal direction of the vehicle (16) and the smaller (28; 32; 28') of which is directed in the azimuth to the side with respect to the vehicle longitudinal direction, wherein the control device (40, 42) is designed to generate different configurations of radar lobes (26, 28; 44; 46, 48) in chronological succession.

2. Radar system according to Claim 1, **characterized in that** the configuration of radar lobes (26, 28) generated at a first time is rotated by a specific angle with respect to a configuration of radar lobes (26', 28') generated at another time.

3. Radar system according to Claim 1, **characterized in that** the configurations of radar lobes (26, 28; 44; 46, 48) which are generated in chronological succession differ in the number of separate radar lobes.

4. Radar system according to Claim 3, **characterized in that** the control device (40, 42) is designed to generate alternately a configuration with two radar lobes (26, 28; 46, 48) and a configuration with just one radar lobe (44), wherein the one radar lobe is approximately at the angle bisector of the two radar lobes of the other configuration.

5. Radar system according to one of the preceding claims, **characterized in that** the control device (40, 42) is designed to vary the irradiation direction of the radar lobes as a function of the curvature of the carriageway.

## Revendications

1. Système de radar pour véhicules automobiles (16), doté d'au moins un détecteur radar (22, 24) servant à surveiller l'environnement du véhicule automobile, notamment du trafic sur une voie voisine (10, 14 ; 50), comportant une antenne (36) à commande de phase et un dispositif de commande (40, 42) permettant de régler plusieurs éventails de radar (26, 28 ; 30, 32 ; 26', 28'; 44 ; 46, 48) de différentes formes géométriques, **caractérisé en ce que** le détecteur radar est conçu pour produire simultanément, au moins de temps en temps, au moins deux éventails de radar (26, 28; 30, 32; 26', 28' ; 46, 48) avec des directions de rayonnement différentes, lesdits éventails présentant des tailles différentes, le plus grand (26 ; 30 ; 26') étant orienté de façon inclinée vers l'arrière et vers l'extérieur par rapport au côté dans l'azimut par rapport à la direction longitudinale du véhicule (16) et le plus petit (28 ; 32 ; 28') étant orienté par rapport au côté dans l'azimut par rapport à la direction longitudinale du véhicule, le dispositif de commande (40, 42) étant conçu pour effectuer différentes configurations d'éventails de radar (26, 28 ; 44 ; 46, 48) les unes après les autres dans le temps.

2. Système de radar selon la revendication 1, **caractérisé en ce que** la configuration d'éventails de radar (26, 28) produite à un premier instant est pivotée d'un angle déterminé par rapport à une configuration d'éventails de radar (26', 28') produite à un autre instant.

3. Système de radar selon la revendication 1, **caractérisé en ce que** les configurations d'éventails de radar (26, 28 ; 44 ; 46, 48) produites les unes après les autres dans le temps se différencient grâce au nombre d'éventails de radar séparés.

4. Système de radar selon la revendication 3, **caractérisé en ce que** le dispositif de commande (40, 42) est conçu pour réaliser en alternance une configuration avec deux éventails de radar (26, 28 ; 46, 48) et une configuration avec un seul éventail de radar (44), la configuration à un éventail de radar faisant approximativement la moitié de l'angle des deux éventails de radar de l'autre configuration.

5. Système de radar selon l'une quelconque des revendications précédentes, **caractérisé en ce que** le dispositif de commande (40, 42) est conçu pour faire varier la direction de rayonnement des éventails de radar en fonction de la courbe de la voie de circulation.
